# EUROPEAN PATENT SPECIFICATION

(11) **EP 3 266 819 B1**
(45) Date of publication and mention of the grant of the patent: **20.02.2019**
(21) Application number: 16758656.9
(22) Date of filing: 04.03.2016
(51) Int. Cl.: B60C 1/00, C08K 3/36, C08F 297/04, C08L 53/02, C08F 8/42

(54) **RUBBER COMPOSITION, PRODUCTION METHOD FOR DIENE POLYMER, AND TIRE**
KAUTSCHUKZUSAMMENSETZUNG, HERSTELLUNGSVERFAHREN FÜR DIENPOLYMER UND REIFEN
COMPOSITION DE CAOUTCHOUC, PROCÉDÉ DE PRODUCTION DE POLYMÈRE DE DIÈNE, ET PNEU

(30) Priority: 05.03.2015 JP 2015044005
(43) Date of publication of application: 10.01.2018
(73) Proprietor: Bridgestone Corporation, Tokyo 104-8340 (JP)
(72) Inventor: SUZUKI, Eiju, Tokyo 104-8340 (JP); YABE, Yudai, Tokyo 104-8340 (JP)
(74) Representative: Oxley, Robin John George
(86) International application number: PCT/JP2016/001213
(87) International publication number: WO 2016/139960

(56) References cited:
- WO-A1-2014/014052
- WO-A1-2014/014052
- JP-A- 2012 214 711
- JP-A- 2012 251 118
- JP-A- 2013 237 766
- JP-A- 2013 245 248
- JP-A- 2015 196 760
- JP-A- 2016 006 153
- JP-A- 2016 065 188
- US-A1- 2014 088 256

## Description

### TECHNICAL FIELD

This disclosure relates to a rubber composition, a method for producing a diene-based polymer, and a tire.

### BACKGROUND

Recently, relating to the currency of global carbon dioxide emission limits accompanying increased concerns with environment problems, requirement for fuel consumption reduction of automobiles is increasing. In order to satisfy such requirement, with respect to tire performances, reduction of rolling resistance is desired as well. Conventionally, as a method for reducing rolling resistance of tire, optimization of tire structure has been studied. However, currently performed as an ordinary method is to use an excellent one with low tan δ (hereinafter referred to as "low loss property") and low heat generation as a rubber composition applied in a tire.

As a method for obtaining such rubber composition with low heat generation, considered is reduction of fillers such as carbon black, silica and the like, or use of carbon black with large particle size, etc. However, with any one of the methods, it is impossible to avoid deterioration of reinforcing performance, wear resistance and gripping performance on wet road surface of the rubber composition.

On the other hand, as a method for obtaining a rubber composition with low heat generation, various techniques have been developed for improving the dispersibility of fillers in the rubber composition. Among such techniques, particularly effective is a method of modifying with a functional group capable of interacting with a filler a polymerization active site of a conjugated diene-based polymer obtained via anionic polymerization by using alkyllithium.

For example, PTL1 discloses a method of using carbon black as a filler, and using a modified conjugated diene-based polymer with polymerization active sites modified with a tin compound as a rubber component. Moreover, PTL2 discloses a method of using carbon black as a filler, and using a modified conjugated diene-based polymer with both polymerization active terminals modified with a tin compound as a rubber component.

However, in the case of using the modified conjugated diene-based polymers as disclosed in PTL1 and PTL2, although the dispersibility improvement effect of the filler due to the modified conjugated diene-based polymer is great in a rubber composition for low fuel consumption tire with a small compounding amount of filler and softener, there was a problem that in a rubber composition for general-purpose tire with a large compounding amount of filler and softener, the dispersibility improvement effect of the filler due to the modified conjugated diene-based polymer cannot be sufficiently exhibited, and the low loss property, the breaking resistance and the wear resistance of the rubber composition cannot be sufficiently improved.

Therefore, in order to obtain excellent dispersibility of the filler, breaking resistance, wear resistance and low loss property even in the case where the compounding amount of filler or softener is large, PTL3 discloses a rubber composition using a modified conjugated diene-based polymer having 5 or more nitrogen-including functional groups as a rubber component.

### CITATION LIST

### Patent Literature

PTL1 JPH05287121A
PTL2 JPH0649279A
PTL3 JP2005298626A

### SUMMARY

### (Technical Problem)

By using the rubber composition of PTL3, it became possible to obtain breaking resistance, wear resistance and low loss property at some degree even in the case where the compounding amount of filler and softener is large. However, in order to further improve the performances when used in a tire, further improvement in low loss property, breaking resistance and wear resistance has been desired. Specifically desired is a technique capable of achieving excellent low loss property, breaking resistance and wear resistance, in the case where silica is contained as a filler in the rubber composition at a large amount.

This disclosure is to provide a rubber composition excellent in low loss property, breaking resistance and wear resistance in the case of containing silica at a large amount as a filler. Moreover, this disclosure is to provide a method for producing a diene-based polymer excellent in low loss property, breaking resistance and wear resistance in the case of containing silica at a large amount as a filler, and is to provide a tire excellent in low loss property, breaking resistance and wear resistance.

### (Solution to Problem)

In order to achieve the aforementioned purpose, we have intensively studied rubber compositions containing a rubber component having a diene-based polymer, and containing a silica. We discovered that by disposing 3 or more modified functional groups capable of interacting with silica merely in a specific range of a diene-based polymer (specifically, a range of 1/4 of the entire chain length from at least one terminal), and having at least one monomer structural unit of a diene-based polymer among the modified functional groups, the affinity of the modified diene-based polymer and the silica is greatly improved, and the dispersibility of the silica is improved, which enables achievement of excellent low loss property, breaking resistance and wear resistance. Thereby, we accomplished this disclosure.

The rubber composition of this disclosure is a rubber composition containing a rubber component having a diene-based polymer and a silica, wherein: the diene-based polymer has 3 or more modified functional groups capable of interacting with the silica merely within a range of 1/4 of an entire chain length from a terminal, and has at least one monomer structural unit of a diene-based polymer among the modified functional groups; and a content of the silica is 60 to 250 parts by mass per 100 parts by mass of the rubber component, and wherein each modified functional group is a nitrogen-containing functional group, silicon-containing functional group or oxygen-containing functional group.

According to the aforementioned structure, it is possible to achieve excellent low loss property, breaking resistance and wear resistance.

It is preferable that the diene-based polymer has monomer structural units of the diene-based polymer at all points among the modified functional groups. This is because that it is possible to achieve more excellent low loss property, breaking resistance and wear resistance.

It is preferable that a peak molecular weight of the diene-based polymer is 50,000 to 700,000. This is because that it is possible to achieve more excellent breaking resistance and wear resistance, and to obtain excellent processability.

The modified functional group is nitrogen-containing functional group, silicon-containing functional group or oxygen-containing functional group. This is because that it is possible to achieve low loss property, breaking resistance and wear resistance more securely.

The diene-based polymer is preferably a polymer or copolymer formed by polymerizing 60 to 100 mass% of a diene-based monomer and 0 to 40 mass% of an aromatic vinyl compound; moreover, it is more preferable that the diene-based monomer is 1,3-butadiene, further more preferable that the aromatic vinyl compound is styrene. This is because that it is possible to achieve more excellent low loss property, breaking resistance and wear resistance.

The rubber component preferably further has at least one of natural rubber, polyisoprene rubber, polybutadiene rubber and styrene-butadiene rubber except the diene-based polymer. This is because that it is possible to achieve more excellent low loss property, breaking resistance and wear resistance.

A content of the diene-based polymer in the rubber component is preferably 10 mass% or more. This is because that it is possible to achieve excellent low loss property, breaking resistance and wear resistance more securely.

The method for producing a diene-based polymer of this disclosure comprises: forming a molecular chain of a diene-based polymer without modified functional groups, and
forming a molecular chain formed of the functional groups and a monomer structural unit of the diene-based polymer, wherein: a diene-based polymer having 3 or more modified functional groups capable of interacting with the silica merely within a range of 1/4 of an entire chain length from a terminal, and having at least one monomer structural unit of a diene-based polymer among the modified functional groups is obtained, and wherein each modified functional group is a nitrogen-containing functional group, silicon-containing functional group or oxygen-containing functional group.
This is because that according to the aforementioned configuration, it is possible to obtain a diene-based polymer capable of achieving low loss property, breaking resistance and wear resistance.

In the method for producing a diene-based polymer of this disclosure, it is preferable that the molecular chain of the diene-based polymer without modified functional groups is formed before forming the molecular chain. This is because that it is possible to generate a diene-based polymer having 3 or more modified functional groups capable of interacting with the silica merely within a range of 1/4 of the entire chain length from a terminal.

In the method for producing a diene-based polymer of this disclosure, it is preferable that the molecular chain including the functional groups and the monomer structural unit of the diene-based polymer is formed by alternatively or simultaneously adding a monomer component of the diene-based polymer and a modifier, or, by alternatively or simultaneously adding a monomer component of the diene-based polymer, and a compound having a site capable of copolymerizing with the monomer component and capable of chemically reacting with a modified functional group including compound and thereby introduced modified functional groups. This is because that it is possible to further generate a diene-based polymer having 3 or more modified functional groups capable of interacting with the silica merely within a range of 1/4 of the entire chain length from a terminal.

The tire of this disclosure uses the aforementioned rubber composition as a tread member.
According to the aforementioned configuration, it is possible to achieve excellent low loss property, breaking resistance and wear resistance.

### (Advantageous Effect)

According to this disclosure, it is possible to provide a rubber composition excellent in low loss property, breaking resistance and wear resistance in the case of containing silica at a large amount as a filler. Moreover, according to this disclosure, it is possible to provide a method for producing a diene-based polymer excellent in low loss property, breaking resistance and wear resistance in the case of containing silica at a large amount as a filler, and to further provide a tire excellent in low loss property, breaking resistance and wear resistance.

### DETAILED DESCRIPTION

### <Rubber composition>

Hereinafter, with respect to the rubber composition of this disclosure, an embodiment is described in details.

The rubber composition of this disclosure is a rubber composition containing a rubber component having a diene-based polymer and a silica, wherein: the diene-based polymer has modified functional groups capable of interacting with the silica, and a content of the silica is 60 to 250 parts by mass per 100 parts by mass of the rubber component.

By containing the silica at a large content of 60 to 250 parts by mass per 100 parts by mass of the rubber component, it is possible to improve the reinforcing effect due to the silica, and to improve the breaking resistance and the wear resistance of the rubber composition. However, there is a risk that the operability of the rubber composition is deteriorated during kneading, and the dispersibility of the silica is reduced. Therefore, by using a conjugated diene-based polymer having modified functional groups capable of interacting with the silica in the rubber component, it is possible to improve the affinity between the rubber component and the silica and to improve the dispersibility of the filler. As a result, achievement of low loss property, breaking resistance and wear resistance of the rubber composition becomes possible.

Further, in the rubber composition of this disclosure, the diene-based polymer has 3 or more of the modified functional groups merely within a range of 1/4 of the entire chain length from a terminal, and has at least one monomer structural unit of a diene-based polymer among the modified functional groups. It is considered that by disposing the diene-based polymer merely within a range of 1/4 of the entire chain length from a terminal, it is possible to obtain an effect of efficiently dispersing the silica, and simultaneously, by inserting a monomer structural unit of a diene-based polymer between the modified functional groups, it is possible to efficiently break aggregates of the silica. Further, as compared to conventional diene-based polymers having merely one single feature, and as compared to the case of using conventional modified polymers, if the effects above are combined together, the reaction between the silica and the modified functional groups in the rubber component is performed efficiently, and as a result, it is possible to exhibit a high dispersibility, and to further improve the low loss property, the breaking resistance and the wear resistance of the rubber composition.

On the other hand, regarding a diene-based polymer of a mode where a modifier is added into the entire polymer chain, the polymer chain connects aggregates of the silica, which contrarily deteriorates the dispersibility of the silica, and deteriorates the low loss property, the breaking resistance and the wear resistance of the rubber composition.

### (Rubber component)

The rubber component contained in the rubber composition of this disclosure has a diene-based polymer. This diene-based polymer has 3 or more modified functional groups capable of interacting with the silica merely within a range of 1/4 of an entire chain length from its terminal, and has at least one monomer structural unit of a diene-based polymer among the modified functional groups.

Here, the diene-based polymer may be either a modified diene copolymer, or a modified diene homopolymer. Among these, preferable is a copolymer of a diene-based monomer and an aromatic vinyl compound or a homopolymer of a diene-based monomer, and more preferable is a polymer (homopolymer) or copolymer formed by polymerizing 60 to 100 mass% of a diene-based monomer and 0 to 40 mass% of an aromatic vinyl compound. This is because that it is possible to further improve the low loss property, the breaking resistance and the wear resistance of the rubber composition.

The diene-based monomer is exemplified as conjugated diene compounds such as 1,3-butadiene, isoprene, 1,3-pentadiene, 2,3-dimethylbutadiene, 2-phenyl-1,3-butadiene, 1,3-hexadiene and the like, and among these, 1,3-butadiene is specifically preferable. These conjugated diene compounds may be used singly or in a combination of two or more.

On the other hand, the aromatic vinyl compound as a monomer is exemplified as styrene, α-methylstyrene, 1-vinylnaphthalene, 3-vinyltoluene, ethylvinylbenzene, divinylbenzene, 4-cyclohexylstyrene and 2,4,6-trimethylstyrene, etc., and among these, styrene is specifically preferable. These aromatic vinyl compounds may be used singly or in a combination of two or more.

Here, the modified functional groups capable of interacting with the silica refer to functional groups capable of either forming covalent bonds between the functional groups and the silica surface, or forming an intermolecular force weaker than the covalent bond (an electromagnetic force functioning between molecules, such as ion-dipole interaction, dipole-dipole interaction, hydrogen bond, Van der Waals force and the like). The modified functional groups are nitrogen-containing functional groups, silicon-containing functional groups and oxygen-containing functional groups.

The state having 3 or more of the modified functional groups within a range of 1/4 of the entire chain length from a terminal refers to a state where 3 or more of the modified functional group exist within a range of 1/4 from a terminal in the diene-based polymer (a range of 25% from the terminal), and no modified functional groups exist in the range other than 1/4 from the terminal.

Here, the terminal of the diene-based polymer refers to at least either one of the terminals, and the range having the modified functional groups may be either a range of 1/4 of the entire chain length from one terminal (tip), or a range of respectively 1/4 of the entire chain length from both terminals of the diene-based polymer. However, from the viewpoint of efficiently obtaining the performances of the diene-based polymer itself and the performances due to modification, it is preferable to exist on merely one terminal.

As mentioned above, the state having at least one monomer structural unit of a diene-based polymer among the modified functional groups refers to a state that with respect to each functional group existing within a range of 1/4 of the entire chain length from a terminal of the diene-based polymer, a monomer structural unit of a diene-based polymer is located between a modified functional group and another modified functional group (for example, 1,3-butadiene in the case where the diene-based polymer is polybutadiene, and styrene and/or 1,3-butadiene in the case of styrene-butadiene copolymer), while the modified functional groups are not bonded to each other.

By applying a structure such that the modified functional groups are not bonded to each other within the range of 1/4 of the entire chain length from a terminal of the diene-based polymer, it is possible to further improve the affinity with silica, and thus it is possible to achieve more excellent low loss property, breaking resistance and wear resistance.

Furthermore, from the same viewpoint, it is preferable to have the monomer structural units of the diene-based polymer at all points among the modified functional groups (i.e., no modified functional groups are directly bonded to each other in the diene-based polymer).

As a polymerization method for obtaining the diene-based polymer, any one of anionic polymerization, coordination polymerization and emulsion polymerization may be used. The modifier may be either a modifier reacting with polymerization active terminals of anionic polymerization or coordination polymerization, or an amide moiety of a lithium amide compound used as a polymerization initiator. Moreover, in emulsion polymerization, the modifier may be copolymerized as a monomer.

Here, the molecular weight of the diene-based polymer is not specifically limited, but if the peak molecular weight is 50,000 or more, it is possible to obtain more excellent breaking resistance and wear resistance, and if 700,000 or less, it is possible to obtain an excellent processability. Further, in order to achieve both excellent breaking resistance, wear resistance and excellent processability, a peak molecular weight of 100,000 to 350,000 is desirable. The peak molecular weight is a peak molecular weight (Mp) measured via gel permeation chromatography (GPC), in terms of polystyrene.

A content of the diene-based polymer in the rubber component is preferably 10 mass% or more. This is because that if the content of the diene-based polymer in the rubber component is less than 10 mass%, the improvement effect to the dispersibility of the filler is poor, and thus the improvement effect to the low loss property, the breaking resistance and the wear resistance of the rubber composition is poor.

Here, the modifier used in the modification when obtaining the diene-based polymer is described.

The modifier is a modifier containing functional groups with interactivity with silica, and is preferably a modifier having at least one atom selected from silicon atom, nitrogen atom and oxygen atom.

From the viewpoint of having a high affinity with the silica, the modifier is preferably an alkoxysilane compound.

Further, the alkoxysilane compound is not specifically limited, but is more preferably an alkoxysilane compound expressed with the following general formula (I).
[Formula 1]

R¹ₐ₋Si-(OR²)₄₋ₐ ··· (I)

(In the formula, R¹ and R² independently represent a C1 to C20 monovalent aliphatic hydrocarbon group or a C6 to C18 monovalent aromatic hydrocarbon group, and in the case where a is an integer of 0 to 2 and OR² is plural, the plurality of OR² may be either identical to or different from each other. Moreover, the molecule does not contain active proton.)

Here, the alkoxysilane compound expressed with the following general formula (I) is specifically exemplified as tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimethyldimethoxysilane, methylphenyldimethoxysilane, dimethyldiethoxysilane, vinyltrimethoxysilane, vinyltriethoxysilane, divinyldiethoxysilane, etc., among which tetraethoxysilane, methyltriethoxysilane and dimethyldiethoxysilane are preferable. These may be used singly or in a combination of two or more.

From the viewpoint of having a high affinity with the silica, the modifier may be a hydrocarbyl oxysilane compound.

Further, the hydrocarbyl oxysilane compound is preferably a s compound represented with the following general formula (III).

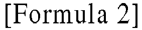

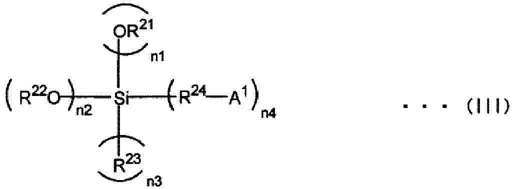

In the general formula (III), n1+n2+n3+n4=4 (where n2 is an integer of 1 to 4, and n1, n3 and n4 are integers of 0 to 3); A¹ is at least one functional group selected from saturated cyclic tertiary amine compound residual group, unsaturated cyclic tertiary amine compound residual group, ketimine residual group, nitrile group, (thio)isocyanate group (representing isocyanate group or thioisocyanate group; the same hereinafter.), (thio)epoxy group, trihydrocarbyl isocyanurate group, dihydrocarbyl carbonate group, nitrile group, pyridine group, (thio)ketone group, (thio)aldehyde group, amide group, (thio)carboxylate group, metallic salt of (thio)carboxylate, carboxylic anhydride residual group, carboxylic halide residual group, and primary or secondary amide group or mercapto group having hydrolyzable group, and may be either identical or different when n4 is 2 or more; further, A¹ may be a divalent group which bonds with Si and forms a cyclic structure; R²¹ is a C1 to C20 monovalent aliphatic or alicyclic hydrocarbon group or a C6 to C18 monovalent aromatic hydrocarbon group, and may be either identical or different when n1 is 2 or more; R²³ is a C1 to C20 monovalent aliphatic or alicyclic hydrocarbon group, a C6 to C18 monovalent aromatic hydrocarbon group or a halogen atom (fluorine, chlorine, bromine, iodine), and may be either identical or different when n3 is 2 or more; R²² is a C1 to C20 monovalent aliphatic or alicyclic hydrocarbon group or a C6 to C18 monovalent aromatic hydrocarbon group, either one of which may contain a nitrogen atom and/or a silicon atom, and may be either identical or different, or form a ring together when n2 is 2 or more; and R²⁴ is a C1 to C20 divalent aliphatic or alicyclic hydrocarbon group, or a C6 to C18 divalent aromatic hydrocarbon group, and may be either identical or different when n4 is 2 or more.

The hydrolyzable group in the primary or secondary amino group having hydrolyzable group or the mercapto group having hydrolyzable group is preferably trimethylsilyl group or tert-butyl dimethylsilyl group, more preferably trimethylsilyl group.

Further, in this disclosure, the "C1 to C20 monovalent aliphatic or alicyclic hydrocarbon group" refers to "C1 to C20 monovalent aliphatic hydrocarbon group or C3 to C20 monovalent alicyclic hydrocarbon group". The same goes with the case of divalent hydrocarbon group.

The hydrocarbyl oxysilane compound represented with the general formula (III) is preferably a hydrocarbyl oxysilane compound represented with the following general formula (IV).

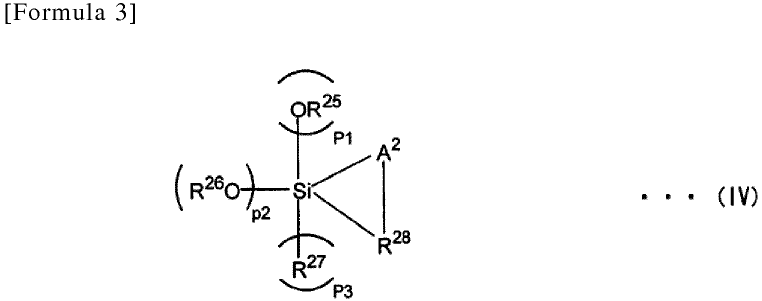

In the general formula (IV), p1+p2+p3=2 (where p2 is an integer of 1 to 2, and p1 and p3 are integers of 0 to 1); A² is NRa (Ra is a monovalent hydrocarbon group, hydrolyzable group or nitrogen-containing organic group. As a hydrolyzable group, trimethylsilyl group or tert-butyldimethylsilyl group is preferable, and trimethylsilyl group is more preferable.) or sulfur; R²⁵ is a C1 to C20 monovalent aliphatic or alicyclic hydrocarbon group, or a C6 to C18 monovalent aromatic hydrocarbon group; R²⁷ is a C1 to C20 monovalent aliphatic or alicyclic hydrocarbon group, a C6 to C18 monovalent aromatic hydrocarbon group, or a halogen atom (fluorine, chlorine, bromine, iodine); R²⁶ is a C1 to C20 monovalent aliphatic or alicyclic hydrocarbon group, a C6 to C18 monovalent aromatic hydrocarbon group, or a nitrogen-containing organic group, any one of which may contain a nitrogen atom and/or a silicon atom, and may be either identical or different, or form a ring together when p2 is 2; and R²⁸ is a C1 to C20 divalent aliphatic or alicyclic hydrocarbon group or a C6 to C18 divalent aromatic hydrocarbon group.

The hydrocarbyl oxysilane compound represented with the general formula (IV) is more preferably a hydrocarbyl oxysilane compound represented with the following general formula (V) or (VI).

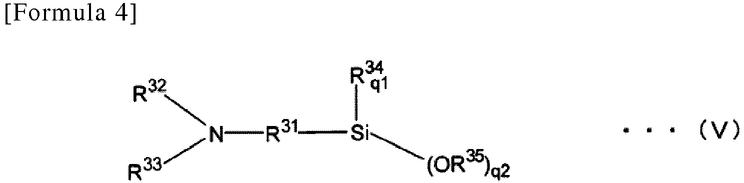

In the general formula (V), q1+q2=3 (where q1 is an integer of 0 to 2, q2 is an integer of 1 to 3); R³¹ is a C1 to C20 divalent aliphatic or alicyclic hydrocarbon group or a C6 to C18 divalent aromatic hydrocarbon group; R³² and R³³ are independently a hydrolyzable group, a C1 to C20 monovalent aliphatic or alicyclic hydrocarbon group, or a C6 to C18 monovalent aromatic hydrocarbon group; R³⁴ is a C1 to C20 monovalent aliphatic or alicyclic hydrocarbon group or a C6 to C18 monovalent aromatic hydrocarbon group, and may be either identical or different when q1 is 2; R³⁵ is a C1 to C20 monovalent aliphatic or alicyclic hydrocarbon group, or a C6 to C18 monovalent aromatic hydrocarbon group, and may be either identical or different when q2 is 2 or more.

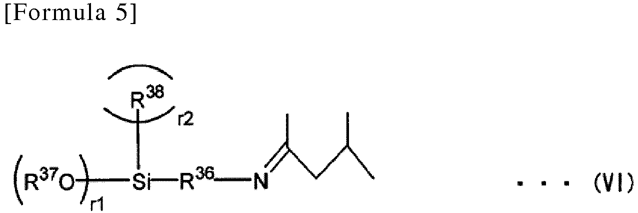

In the general formula (VI), r1+r2=3 (where r1 is an integer of 1 to 3, and r2 is an integer of 0 to 2); R³⁶ is a C1 to C20 divalent aliphatic or alicyclic hydrocarbon group or a C6 to C18 divalent aromatic hydrocarbon group; R³⁷ is dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, C1 to C20 monovalent aliphatic or alicyclic hydrocarbon group, or C6 to C18 monovalent aromatic hydrocarbon group, and may be either identical or different when r1 is 2 or more; R³⁸ is a C1 to C20 hydrocarbyloxy group, a C1 to C20 monovalent aliphatic or alicyclic hydrocarbon group, or a C6 to C18 monovalent aromatic hydrocarbon group, and may be either identical or different when r2 is 2.

The modifier is preferably a hydrocarbyl oxysilane compound having 2 or more nitrogen atoms represented with the following general formula (VII) or (VIII).

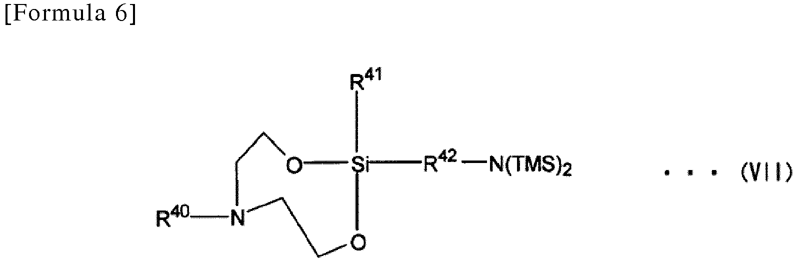

In general formula (VII), TMS is trimethylsilyl group, R⁴⁰ is trimethylsilyl group, a C1 to C20 monovalent aliphatic or alicyclic hydrocarbon group, or a C6 to 18 monovalent aromatic hydrocarbon group; R⁴¹ is a C1 to C20 hydrocarbyloxy group, a C1 to C20 monovalent aliphatic or alicyclic hydrocarbon group, or a C6 to C18 monovalent aromatic hydrocarbon group; and R⁴² is a C1 to C20 divalent aliphatic or alicyclic hydrocarbon group, or a C6 to C18 divalent aromatic hydrocarbon group.

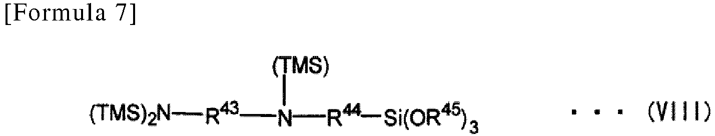

In the general formula (VIII), TMS is a trimethylsilyl group, R⁴³ and R⁴⁴ are independently a C1 to C20 divalent aliphatic or alicyclic hydrocarbon group or a C6 to C18 divalent aromatic hydrocarbon group; R⁴⁵ is a C1 to C20 monovalent aliphatic or alicyclic hydrocarbon group or a C6 to C18 monovalent aromatic hydrocarbon group, and the plurality of R⁴⁵ may be identical or different.

The hydrocarbyl oxysilane compound represented with the general formula (III) is preferably a hydrocarbyl oxysilane compound the represented with the general formula (IX).

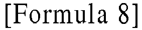

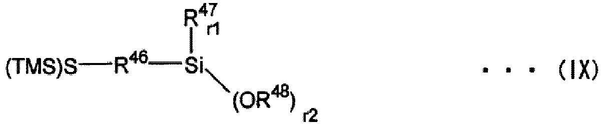

In the general formula (IX), r1+r2=3 (where r1 is an integer of 0 to 2, and r2 is an integer of 1 to 3); TMS is trimethylsilyl group; R⁴⁶ is a C1 to C20 divalent aliphatic or alicyclic hydrocarbon group or a C6 to 18 divalent aromatic hydrocarbon group; R⁴⁷ and R⁴⁸ are independently a C1 to C20 monovalent aliphatic or alicyclic hydrocarbon group or a C6 to C18 monovalent aromatic hydrocarbon group. The plurality of R⁴⁷ or R⁴⁸ may be either identical or different.

The modifier is preferably a hydrocarbyl oxysilane compound represented with the following general formula (X).

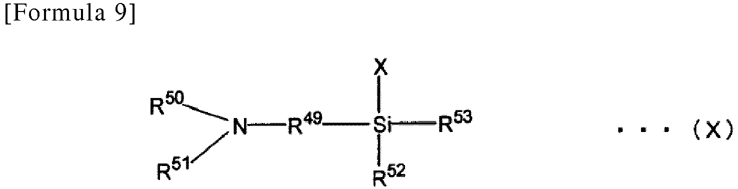

In the general formula (X), X is a halogen atom; R⁴⁹ is a C1 to C20 divalent aliphatic or alicyclic hydrocarbon group or a C6 to C18 divalent aromatic hydrocarbon group; R⁵⁰ and R⁵¹ are either independently a hydrolyzable group, a C1 to C20 monovalent aliphatic or alicyclic hydrocarbon group or a C6 to C18 monovalent aromatic hydrocarbon group, or alternatively, R⁵⁰ and R⁵¹ are bonded to formed a divalent organic group; R⁵² and R⁵³ are independently a halogen atom, a hydrocarbyloxy group, a C1 to C20 monovalent aliphatic or alicyclic hydrocarbon group, or a C6 to C18 monovalent aromatic hydrocarbon group. R⁵⁰ and R⁵¹ are preferably hydrolyzable groups, and as a hydrolyzable group, trimethylsilyl group or tert-butyl dimethylsilyl group is preferable, and trimethylsilyl group is more preferable.

The hydrocarbyl oxysilane compounds represented with the general formulae (III) to (X) in the above are preferably used as modifiers in the case where a modified conjugated diene-based polymer is produced via anionic polymerization.

Moreover, the hydrocarbyl oxysilane compounds represented with the general formulae (III) to (X) are preferably alkoxysilane compounds.

Modifiers preferable in the case of modifying the diene-based polymer via anionic polymerization are specifically exemplified as at least one compound selected from 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone and 1-methyl-2-pyrrolidone.

The modifier is preferably an amide moiety of a lithium amide compound used as a polymerization initiator in anionic polymerization.

This lithium amide compound is preferably exemplified as at least one compound selected from lithium hexamethyleneimide, lithium pyrrolizide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide and lithium methylphenethylamide. For example, the modifier for forming the amide moiety of lithium hexamethyleneimide is hexamethyleneimine, the modifier for forming the amide moiety of lithium pyrrolizide is pyrrolidine, and the modifier for forming the amide moiety of lithium piperidide is piperidine.

Modifiers preferable in the case of modifying the diene-based polymer via coordination polymerization are exemplified as at least one compound selected from 2-cyanopyridine and 3,4-ditrimethylsilyloxy benzaldehyde.

Modifiers preferable in the case of modifying the diene-based polymer via emulsion polymerization are exemplified as at least one compound selected from 3,4-ditrimethylsilyloxy benzaldehyde and 4-hexamethylene iminoalkyl styrene. These modifiers preferably used in emulsion polymerization are preferably copolymerized during emulsion polymerization as a monomer containing nitrogen atom and/or silicon atom.

The diene-based polymer preferably has a glass transition temperature (Tg) of 0°C or less measured with a differential scanning calorimeter (DSC). If the glass transition temperature of the diene-based polymer is more than 0°C, the rubber properties at low temperature are significantly deteriorated.

In the rubber composition of this disclosure, except the aforementioned diene-based polymer, the rubber component may further contain natural rubber (NR), styrene-butadiene copolymer (SBR), polybutadiene rubber (BR), polyisoprene rubber (IR), butyle rubber (IIR), ethylene-propylene copolymer, etc., and among these, preferably contains at least one among natural rubber, polyisoprene rubber, polybutadiene rubber and styrene-butadiene rubber. These rubber components may be used singly or as a blend of two or more.

### (Method for producing diene-based polymer)

The method for producing the aforementioned diene-based polymer of this disclosure is not specifically limited as long as capable of having three or more modified functional groups merely within a range of 1/4 of the entire chain length from its terminal, and forming a monomer structural unit of at least one monomer structural unit of a diene-based polymer among the modified functional groups.

As a production method, for example, it is possible to produce the aforementioned modified diene-based polymer by: forming a molecular chain of the diene-based polymer without the modified functional groups (a range of 3/4 of the entire chain length from a terminal of the diene-based polymer); and forming a molecular chain formed of the functional groups and the monomer structural unit of the diene-based polymer (a range of 1/4 of the entire chain length from a terminal of the diene-based polymer). Here, it is preferable that form the molecular chain of the diene-based polymer without modified functional groups is formed before forming the molecular chain formed of the functional groups and the monomer structural unit of the diene-based polymer. This is because that by if the molecular chain formed of the functional groups and the monomer structural unit of the diene-based polymer is formed first, there is a probability that the unreacted functional groups and monomer of the diene-based polymer react in the following process, and formation is performed out of the range of 1/4 of the entire chain length from a terminal of the diene-based polymer.
Here, in the case of first forming the molecular chain formed of the functional groups and the monomer structural unit of the diene-based polymer, it is preferable that the molecular chain of the diene-based polymer without modified functional groups is formed after certifying that the polymerization conversion rate is 100% whenever formation of the molecular chain formed of the functional groups and the monomer structural unit of the diene-based polymer is terminated. This is because that if the next process is performed without certifying that the polymerization conversion rate is 100%, there is a probability that formation is performed out of the range of 1/4 of the entire chain length from a terminal of the diene-based polymer.

Here, formation of the molecular chain formed of the functional groups and the monomer structural unit of the diene-based polymer is exemplified as the following methods (1) to (4).
(1) A method alternatively adding the monomer component of the diene-based polymer, and a modifier copolymerizable with the monomer component and having modified functional groups.
(2) A method simultaneously adding the monomer component of the diene-based polymer, and a modifier copolymerizable with the monomer component and having modified functional groups.
(3) A method alternatively adding the monomer component of the diene-based polymer, and a compound having a site copolymerizable with the monomer component and capable of introduced modified functional groups by chemically reacting with a compound including modified functional groups.
(4) A method simultaneously adding the monomer component of the diene-based polymer, and a compound having a site copolymerizable with the monomer component and capable of introduced modified functional groups by chemically reacting with a compound including modified functional groups.

Among the aforementioned (1) to (4), from the viewpoint of the possibility of securely forming a structure having the monomer structural unit of the diene-based polymer between all the modified functional group (i.e., none of the modified functional groups in the diene-based polymer is directly bonded), the aforementioned method (1) or (3) is preferable, and in order to reduce the time for production and improve the productivity, the aforementioned method (2) or (4) is preferable. Here, the aforementioned compound having a site copolymerizable with the monomer component and capable of introduced modified functional groups by chemically reacting with a compound including modified functional groups is exemplified as p-methyl styrene.

### (Silica)

The rubber composition of this disclosure contains a silica by 60 to 250 parts by mass per 100 parts by mass of the rubber component. This is because that by containing a silica, it is possible to improve the reinforcing effect of the rubber composition, and to improve the breaking resistance and the wear resistance.

Here, the content of the silica is set to 60 to 250 parts by mass, because that in the case where the content is less than 60 parts by mass, the amount of the silica is small, and thus it is impossible to obtain sufficiently improvement effect to breaking resistance and wear resistance; and if the content is more than 250 parts by mass, the amount of the silica is excessively large, and thus the elongation and the processability of the rubber composition is deteriorated. From the same viewpoint, the content of the silica is preferably 70 to 210 parts by mass, more preferably 75 to 170 parts by mass. Further, from the viewpoint of the breaking resistance, the wear resistance, and the elongation and the processability of the rubber composition, the most preferable compounding amount of the silica is 75 to 120 parts by mass.

The type of the silica is not specifically limited, and may use either silicas of ordinary grade and special silicas subjected to surface treatment according to its usage. For example, from the viewpoint of improving the processability, the mechanical strength and the wear resistance, wet silica is preferably used.

### (Other components)

Other than the aforementioned rubber component and silica, the rubber composition of this disclosure may appropriately select and compound compounding agents ordinarily used in the rubber industry as long as not imparing the purpose of this disclosure, e.g., carbon black, age resistor, silane coupling agent, vulcanization accelerator, vulcanization accelerator aid, vulcanizing agent, softener, etc. These compounding agents are preferably commercially available ones. The rubber composition of this disclosure may be produced by compounding to the rubber component, the silica, and appropriately selected various compounding agents if necessary, via kneading, warming, extrusion, etc.

Here, the carbon black is not specifically limited, but is preferably one of FEF, SRF, HAF, ISAF, SAF grade, more preferably one of HAF, ISAF, SAF grade.

Moreover, the content of the carbon black is not specifically limited, and may be appropriately adjusted depending on the purpose.

### <Tire>

The tire of this disclosure uses the rubber composition in a tread member. A tire using the rubber composition as a tread member, in particular, as a tread rubber, is excellent in low loss property, breaking resistance and wear resistance. Here, the tire of this disclosure is not specifically limited as long as using the aforementioned rubber composition on any tread member, and may be produced with an ordinary method. Moreover, the gas filled in the tire may be ordinary air, air with adjusted oxygen partial pressure, or inactive gases such as nitrogen, argon, helium and the like.

### EXAMPLES

This disclosure will be explained in further detail below according to examples, while this disclosure is not limited to the examples below.

Modified polymers A to L were produced according to the following process. Here, presence/absence of direct bonding between modified functional groups, positions of modified functional groups, types of modified functional groups, numbers of modified functional groups and peak molecular weights of modified polymers of each modified polymer are as shown in Table 1. Here, measurement of the peak molecular weight of the modified polymers in Table 1 was performed via gel permeation chromatography [GPC; HLC-8020, column, made by Tosoh Corporation; GMH-XL (series connection of two), made by Tosoh Corporation], by using differential refractive index (RI), with monodisperse polystyrene as a standard, in terms of polystyrene.

### (Production of modified polymer A)

A cyclohexane solution of 1,3-butadiene and a cyclohexane solution of styrene were added into a 800 milliliter pressure-resistant glass container subjected to drying and nitrogen substitution, such that 1,3-butadiene was 60g and styrene was 15g; 0.29 millimol of 2,2-ditetrahydrofurylpropane was added, and 0.57 millimol of n-butyllithium was further added as a polymerization initiator; and then, polymerization was performed at 50°C for 1.5 hours. The polymerization conversion rate in this case was approximately 100%.

Next, 0.57 millimol of 3,4-bis(trimethylsilyloxy)-1-vinylbenzene (oxygen based) was added into the polymerization reaction system as a modifier, and reacted for 30 minutes. Afterward, 0.5 milliliter of an isopropanol 5 mass% solution of 2,6-di-t-butyl-p-cresol (BHT) was added to terminate the reaction, and the modified polymer A was obtained by drying with an ordinary method.

### (Production of modified polymer B)

A cyclohexane solution of 1,3-butadiene and a cyclohexane solution of styrene were added into a 800 milliliter pressure-resistant glass container subjected to drying and nitrogen substitution, such that 1,3-butadiene was 60g and styrene was 15g; 2.85 millimol of 3,4-bis(trimethylsilyloxy)-1-vinylbenzene and 0.29 millimol of 2,2-ditetrahydrofurylpropane were added in order as a modifier, and 0.57 millimol of n-butyllithium was further added as a polymerization initiator; and then, polymerization was performed at 50°C for 1.5 hours. The polymerization conversion rate in this case was approximately 100%. Afterward, 0.5 milliliter of an isopropanol 5 mass% solution of 2,6-di-t-butyl-p-cresol (BHT) was added to terminate the reaction, and the modified polymer B was obtained by drying with an ordinary method.

### (Production of modified polymer C)

A cyclohexane solution of 1,3-butadiene and a cyclohexane solution of styrene were added into a 800 milliliter pressure-resistant glass container subjected to drying and nitrogen substitution, such that 1,3-butadiene was 48g and styrene was 12g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a mixed solution of a cyclohexane solution of 1,3-butadiene containing 12g of 1,3-butadiene, a cyclohexane solution of styrene containing 3g of styrene, and 2.85 millimol of 3,4-bis(trimethylsilyloxy)-1-vinylbenzene as a modifier was added into the polymerization reaction system at one time, and the polymerization reaction was further performed for 1 hour. The polymerization conversion rate in this case was approximately 100%. Afterward, 0.5 milliliter of an isopropanol 5 mass% solution of 2,6-di-t-butyl-p-cresol (BHT) was added to terminate the reaction, and the modified polymer C was obtained by drying with an ordinary method.

### (Production of modified polymer D)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.27g of p-methylstyrene were added into the polymerization reaction system at one time, and the polymerization reaction was further performed for 1 hour. At the timing when the polymerization conversion rate approached 99%, 0.57 millimol of tetraethyl orthosilicate was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of tetraethyl orthosilicate was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer D was obtained by drying with an ordinary method.

### (Production of modified polymer E)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.27g of p-methylstyrene were added into the polymerization reaction system at one time, and the polymerization reaction was further performed for 1 hour. At the timing when the polymerization conversion rate approached 99%, 0.57 millimol of glycidoxypropyltrimethoxysilane was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes.

2.28 millimol of glycidoxypropyltrimethoxysilane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer E was obtained by drying with an ordinary method.

### (Production of modified polymer F)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.27g of p-methylstyrene were added into the polymerization reaction system at one time, and the polymerization reaction was further performed for 1 hour. At the timing when the polymerization conversion rate approached 99%, 0.57 millimol of N-(1,3-dimethylbutylidene)-3-(triethoxysilyl)-1-propaneamine was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of N-(1,3-dimethylbutylidene)-3-(triethoxysilyl)-1-propaneamine was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer F was obtained by drying with an ordinary method.

### (Production of modified polymer G-1)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.27g of p-methylstyrene were added into the polymerization reaction system at one time, and the polymerization reaction was further performed for 1 hour. At the timing when the polymerization conversion rate approached 99%, 0.57 millimol of N,N-bis(trimethylsilyl)-(3-amino-1-propyl)(methyl)(diethoxy)silane was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer G was obtained by drying with an ordinary method.

### (Production of modified polymer G-2)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.60 millimol of 2,2-ditetrahydrofurylpropane was added, and 1.20 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.52g of p-methylstyrene were added into the polymerization reaction system at one time, and the polymerization reaction was further performed for 1 hour. At the timing when the polymerization conversion rate approached 99%, 1.20 millimol of N,N-bis(trimethylsilyl)-(3-amino-1-propyl)(methyl)(diethoxy)silane was added as a terminal modifier and reacted for 15 minutes.

Next, 4.80 millimol of sec-butyllithium and 2.40 millimol of 2,2-ditetrahydrofurylpropane were added into the aforementioned polymer solution, and reacted at 80°C for 10 minutes. 4.80 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer G-2 was obtained by drying with an ordinary method.

### (Production of modified polymer G-3)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.57 millimol of 2,2-ditetrahydrofurylpropane was added, and 1.14 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.48g of p-methylstyrene were added into the polymerization reaction system at one time, and the polymerization reaction was further performed for 1 hour. At the timing when the polymerization conversion rate approached 99%, 1.14 millimol of N,N-bis(trimethylsilyl)-(3-amino-1-propyl)(methyl)(diethoxy)silane was added as a terminal modifier and reacted for 15 minutes.

Next, 4.56 millimol of sec-butyllithium and 2.28 millimol of 2,2-ditetrahydrofurylpropane were added into the aforementioned polymer solution, and reacted at 80°C for 10 minutes. 4.56 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer G-3 was obtained by drying with an ordinary method.

### (Production of modified polymer G-4)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.115 millimol of 2,2-ditetrahydrofurylpropane was added, and 0.23 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.10g of p-methylstyrene were added into the polymerization reaction system at one time, and the polymerization reaction was further performed for 1 hour. At the timing when the polymerization conversion rate approached 99%, 0.23 millimol of N,N-bis(trimethylsilyl)-(3-amino-1-propyl)(methyl)(diethoxy)silane was added as a terminal modifier and reacted for 15 minutes.

Next, 0.92 millimol of sec-butyllithium and 2.85 millimol of 2,2-ditetrahydrofurylpropane were added into the aforementioned polymer solution, and reacted at 80°C for 10 minutes. 0.92 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer G-4 was obtained by drying with an ordinary method.

### (Production of modified polymer H)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.61g of styrene and 0.14g of p-methylstyrene were added into the polymerization reaction system at one time, and the polymerization reaction was further performed for 1 hour. At the timing when the polymerization conversion rate approached 99%, 0.57 millimol of N,N-bis(trimethylsilyl)-(3-amino-1-propyl)(methyl)(diethoxy)silane was added as a terminal modifier and reacted for 15 minutes.

Next, 1.14 millimol of sec-butyllithium and 0.57 millimol of 2,2-ditetrahydrofurylpropane were added into the aforementioned polymer solution, and reacted at 80°C for 10 minutes. 1.14 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer H was obtained by drying with an ordinary method.

### (Production of modified polymer I)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.68g of styrene and 0.07g of p-methylstyrene were added into the polymerization reaction system at one time, and the polymerization reaction was further performed for 1 hour. At the timing when the polymerization conversion rate approached 99%, 0.57 millimol of N,N-bis(trimethylsilyl)-(3-amino-1-propyl)(methyl)(diethoxy)silane was added as a terminal modifier and reacted for 15 minutes.

Next, 0.57 millimol of sec-butyllithium and 0.28 millimol of 2,2-ditetrahydrofurylpropane were added into the aforementioned polymer solution, and reacted at 80°C for 10 minutes. 0.57 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer I was obtained by drying with an ordinary method.

### (Production of modified polymer J)

A cyclohexane solution of 1,3-butadiene and a cyclohexane solution of styrene were added into a 800 milliliter pressure-resistant glass container subjected to drying and nitrogen substitution, such that 1,3-butadiene was 30g and styrene was 7.5g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 30g of 1,3-butadiene and a cyclohexane solution of styrene containing 7.23g of styrene and 0.27g of p-methylstyrene were added into the polymerization reaction system at one time, and the polymerization reaction was further performed for 1 hour. At the timing when the polymerization conversion rate approached 99%, 0.57 millimol of N,N-bis(trimethylsilyl)-(3-amino-1-propyl)(methyl)(diethoxy)silane was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer J was obtained by drying with an ordinary method.

### (Production of modified polymer K)

A cyclohexane solution of 1,3-butadiene and a cyclohexane solution of styrene were added into a 800 milliliter pressure-resistant glass container subjected to drying and nitrogen substitution, such that 1,3-butadiene was 60g and styrene was 14.73g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution styrene containing 0.27g of p-methylstyrene was added, and the polymerization reaction was performed for 15 minutes; then, 0.57 millimol of N,N-bis(trimethylsilyl)-(3-amino-1-propyl)(methyl)(diethoxy)silane was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol(BHT) was added to terminate the reaction, and the modified polymer K was obtained by drying with an ordinary method.

### (Production of modified polymer L)

A cyclohexane solution of 1,3-butadiene and a cyclohexane solution of styrene were added into a 800 milliliter pressure-resistant glass container subjected to drying and nitrogen substitution, such that 1,3-butadiene was 60g and styrene was 15g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, 2.85 millimol of 3,4-bis(trimethylsilyloxy)-1-vinylbenzene (oxygen based) was added as a modifier, and the polymerization reaction was performed for 15 minutes. Afterward, 0.5 milliliter of an isopropanol 5 mass% solution of 2,6-di-t-butyl-p-cresol(BHT) was added to terminate the reaction, and the modified polymer L was obtained by drying with an ordinary method.

### (Production of modified polymer M)

A cyclohexane solution of 1,3-butadiene and a cyclohexane solution of styrene were added into a 800 milliliter pressure-resistant glass container subjected to drying and nitrogen substitution; 0.29 millimol of 2,2-ditetrahydrofurylpropane was added, 0.57 millimol of n-butyllithium was added; and then, polymerization was performed at 50°C for 20 minutes. After certifying that the polymerization conversion rate at this time was approximately 100%, a mixed solution of a cyclohexane solution of 1,3-butadiene containing 1.5g of 1,3-butadiene, a cyclohexane solution of styrene containing 0.375g of styrene, and 2.28 millimol of 3,4-bis(trimethylsilyloxy)-1-vinylbenzene as a modifier was added at one time, and further polymerized for 20 minutes. Afterward, the same operation was repeated for times. Whenever the polymerization was terminated, it was certified that the polymerization conversion rate was 100%.

Further, a cyclohexane solution of 1,3-butadiene containing 48.75g of 1,3-butadiene and a cyclohexane solution of styrene containing 13.125g of styrene was added into the polymerization reaction system, and the polymerization reaction was further performed for 1.5 hours. The polymerization conversion rate in this case was approximately 100%. Afterward, 0.5 milliliter of an isopropanol 5 mass% solution of 2,6-di-t-butyl-p-cresol(BHT) was added to terminate the reaction, and the modified polymer M was obtained by drying with an ordinary method.

### (Production of modified polymer N)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.27g of p-methylstyrene were added into the polymerization reaction system at one time, and the polymerization reaction was further performed for 1 hour. At the timing when the polymerization conversion rate approached 99%, 0.57 millimol of N-[2-N,N'-bis(trimethylsilyl)aminoethyl] -N-(trimethylsilyl)-3-aminopropyltri ethoxysilane was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of N-[2-N,N'-bis(trimethylsilyl)aminoethyl] -N-(trimethylsilyl)-3-aminopropyltri ethoxysilane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer N was obtained by drying with an ordinary method.

### (Production of modified polymer O)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.27g of p-methylstyrene were added into the polymerization reaction system at one time, and the polymerization reaction was further performed for 1 hour. At the timing when the polymerization conversion rate approached 99%, 0.57 millimol of 3-(2,6-dimethyl-1,3,6,2-dioxazasilocan-2-il)-N,N-bis(trimethylsilyl)propane-1-amine was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of 3-(2,6-dimethyl-1,3,6,2-dioxazasilocan-2-il)-N,N-bis(trimethylsilyl)propane-1-amine was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer O was obtained by drying with an ordinary method.

**[Table 1]**

| | Bonding of functional groups | Positions of functional groups | Type of functional group | Number of functional groups | Peak molecular weight |
|---|---|---|---|---|---|
| | | | | | (Mp/10,000) |
| Modified polymer A | Presence | Terminal | 3,4-bis(trimethylsilyloxy)-1-vinylbenzene | 1 | 20 |
| Modified polymer B | Absence | In chain | 3,4-bis(trimethylsilyloxy)-1-vinylbenzene | 5 | 20 |
| Modified polymer C | Absence | Region of 1/4 from a terminal | 3,4-bis(trimethylsilyloxy)-1-vinylbenzene | 5 | 20 |
| Modified polymer D | Absence | Region of 1/4 from a terminal | Tetraethyl orthosilicate | 5 | 20 |
| Modified polymer E | Absence | Region of 1/4 from a terminal | Glycidoxypropyltrimethoxysilane | 5 | 20 |
| Modified polymer F | Absence | Region of 1/4 from a terminal | N-(1,3-dimethylbutylidene)-3-(triethoxysilyn-1-propaneamine | 5 | 20 |
| Modified polymer G-1 | Absence | Region of 1/4 from a terminal | N,N-bis(trimethylsilyl)-(3-amino-1-propyl)(methyl)(diethoxy)silane | 5 | 20 |
| Modified polymer G-2 | Absence | Region of 1/4 from a terminal | N,N-bis(trimethylsilyl)-(3-amino-1-propyl)(methyl)(diethoxy)silane | 5 | 8 |
| Modified polymer G-3 | Absence | Region of 1/4 from a terminal | N,N-bis(trimethylsilyl)-(3-amino-1-propyl)(methyl)(diethoxy)silane | 5 | 10 |
| Modified polymer G-4 | Absence | Region of 1/4 from a terminal | N,N-bis(trimethylsilyl)-(3-amino-1-propyl)(methyl)(diethoxy)silane | 5 | 35 |
| Modified polymer H | Absence | Region of 1/4 from a terminal | N,N-bis(trimethylsilyl)-(3-amino-1-propyl)(methyl)(diethoxy)silane | 3 | 20 |
| Modified polymer I | Absence | Region of 1/4 from a terminal | N,N-bis(trimethylsilyl)-(3-amino-1-propyl)(methyl)(diethoxy)silane | 2 | 20 |
| Modified polymer J | Absence | Region of 1/2 from a terminal | N,N-bis(trimethylsilyl)-(3-amino-1-propyl)(methyl)(diethoxy)silane | 5 | 20 |
| Modified polymer K | Between all functional groups | Region of 1/4 from a terminal | N,N-bis(trimethylsilyl)-(3-amino-1-propyl)(methyl)(diethoxy)silane | 5 | 20 |
| Modified polymer L | Between all functional groups | Region of 1/4 from a terminal | 3,4-bis(trimethylsilyloxy)-1-vinylbenzene | 5 | 20 |
| Modified polymer M | Absence | Region of 1/4 from a terminal | 3,4-bis(trimethylsilyloxy)-1-vinylbenzene | 5 | 20 |
| Modified polymer N | Absence | Region of 1/4 from a terminal | N-[2-N',N'-bis(trimethylsilyl)aminoethyl]-N-(trimethylsilyl)-3-aminopropyltriethoxysilane | 5 | 20 |
| Modified polymer O | Absence | Region of 1/4 from a terminal | 3-(2,6-dimethyl-1,3,6,2-dioxazasilocan-2-il)-N,N-bis(trimethylsilyl)propane-1-amine | 5 | 20 |

### <Examples 1 to 19 and Comparative Examples 1 to 12>

By using the aforementioned modified polymers A to M and adjusting the rubber composition according to the formulation as shown in Table 2, each sample of the examples and the comparative examples was obtained.

With respect to each sample of the examples and the comparative examples, evaluation was performed regarding: (1) processability, (2) breaking elongation, (3) breaking stress, (4) wear resistance, (5) low loss property (tan δ), and (6) comprehensive value.

### (1) Processability

With respect to each sample, according to JIS-K6300-1:2001, the Mooney viscosity [ML1+4(130°C)] of unvulcanized rubber composition was measured with a Mooney viscosity meter (RPA, made by Monsanto), by using an L-type rotor at 130°C.

The value of Mooney viscosity of the obtained unvulcanized rubber composition was represented as an index, with the value of Comparative Example 1 as 100 with respect to Comparative Examples 1 to 3, and with the value of Comparative Example 4 as 100 with respect to Comparative Examples 4 to 10 and Examples 1 to 19. The result was as shown in Table 2. Here, a smaller index value of Mooney viscosity shows better flowability of the unvulcanized rubber composition and more excellent processability.

### (2) Breaking elongation

With respect to each sample, tensile test was performed at room temperature according to JIS-K6251, the breaking elongation of vulcanized rubber composition was measured and represented as an index, with the value of Comparative Example 1 as 100 with respect to Comparative Examples 1 to 3, and with the value of Comparative Example 4 as 100 with respect to Comparative Examples 4 to 10 and Examples 1 to 19. The result was as shown in Table 2.

Here, a larger index value of breaking elongation shows an excellent breaking elongation.

### (3) Breaking stress

With respect to each sample, tensile test was performed at room temperature according to JIS-K6251, the breaking stress of vulcanized rubber composition was measured and represented as an index, with the value of Comparative Example 1 as 100 with respect to Comparative Examples 1 to 3, and with the value of Comparative Example 4 as 100 with respect to Comparative Examples 4 to 10 and Examples 1 to 19. The result was as shown in Table 2. Here, a larger index value of breaking stress shows an excellent breaking stress.

### (4) Wear resistance

With respect to each sample, by using Lambourn abrasion tester, the abrasion amount at a slip rate of 60% at room temperature was measured.

The reciprocal of the obtained value of abrasion amount was represented as an index, with the value of Comparative Example 1 as 100 with respect to Comparative Examples 1 to 3, and with the value of Comparative Example 4 as 100 with respect to Comparative Examples 4 to 10 and Examples 1 to 19. The result was as shown in Table 2. A larger index value shows a less abrasion amount and an excellent wear resistance.

### (5) Low loss property (tan δ)

With respect to each sample, the loss tangent (tan δ) was measured by using a viscoelasticity measurement apparatus (made by Rheometrics Inc.) at a temperature of 50°C, a strain of 5% and a frequency of 15 Hz. The value of the obtained tan δ was represented as an index, with the value of Comparative Example 1 as 100 with respect to Comparative Examples 1 to 3, and with the value of Comparative Example 4 as 100 with respect to Comparative Examples 4 to 10 and Examples 1 to 19. The result was as shown in Table 2. Here, a smaller index value of the low loss property shows an excellent low loss property.

### (6) Comprehensive value

Comprehensive values were calculated based on the results of evaluations (1) to (5) of each sample. Specifically, with respect to each one of the aforementioned evaluations (1) to (5), the different from the standard value 100 was calculated (e.g., "+5" in the case where an index value of an evaluation result, of which a higher value shows a better result, is 105, "-10" in the case where the index value of the evaluation result is 90; and "-5" in the case where an index value of an evaluation result, of which a lower value shows a better result, is 105, and "+10" in the case where the index value of the evaluation result is 90). Further, the total value of each calculated difference of the aforementioned evaluations (1) to (5) is the comprehensive value. For example, in the case of Example 1, the results of the aforementioned evaluations (1) to (5) are 103, 97, 114, 126, 81, and thus, "comprehensive value = -3-3+14+26+19 = 53". Here, an indication was made such that +25 or more of this comprehensive value shows a comprehensively excellent result.

Moreover, with respect to the comprehensive values, in addition to the absolute values of the aforementioned comprehensive value, the degree at which the comprehensive value is excellent or poor with respect to the total standard value (500) of the aforementioned evaluations (1) to (5) was represented as a "%". For example, in the case of Example 1, the comprehensive value was 53, and thus "comprehensive value (%) = 53/500*100 = 10.6%". Here, an indication was made such that +5% or more of this comprehensive value represented as % shows a comprehensively excellent result.

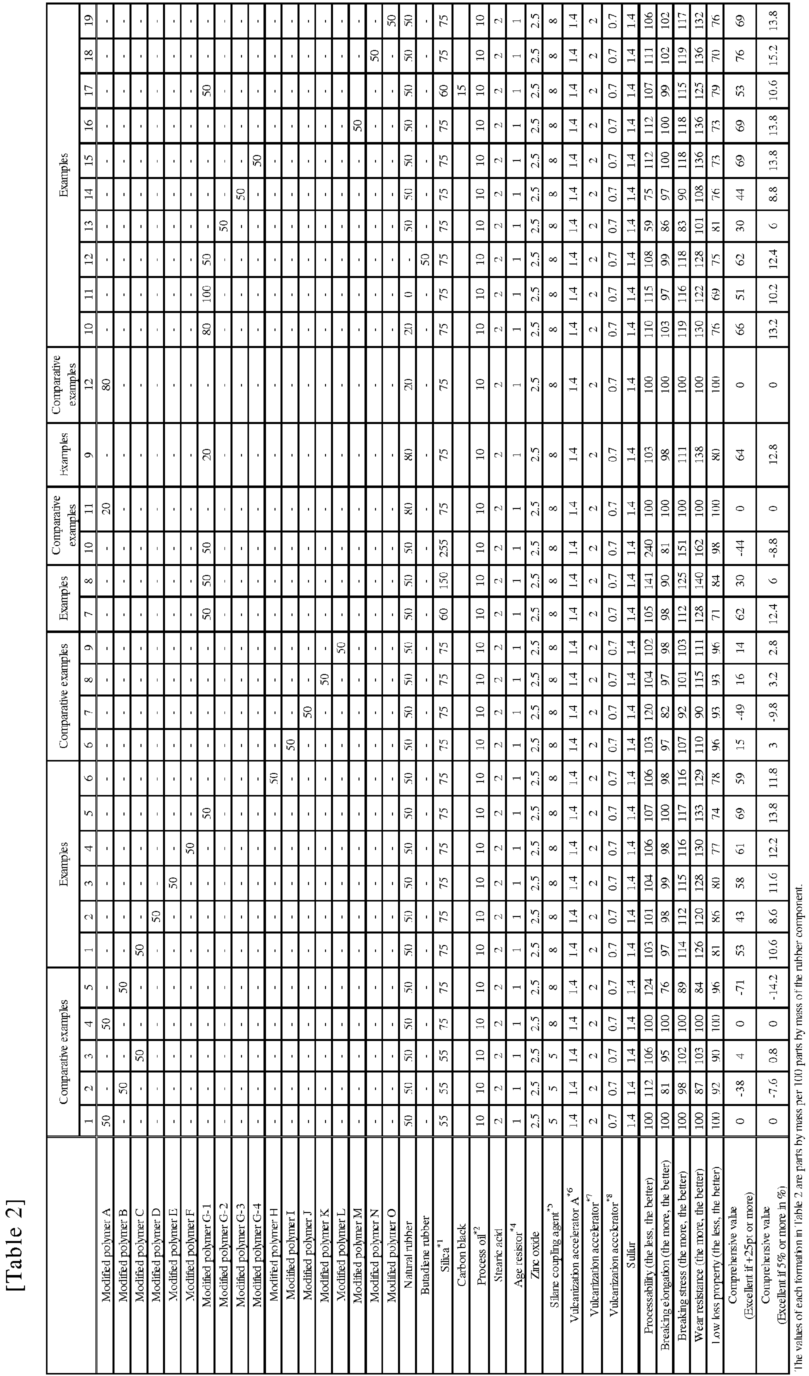

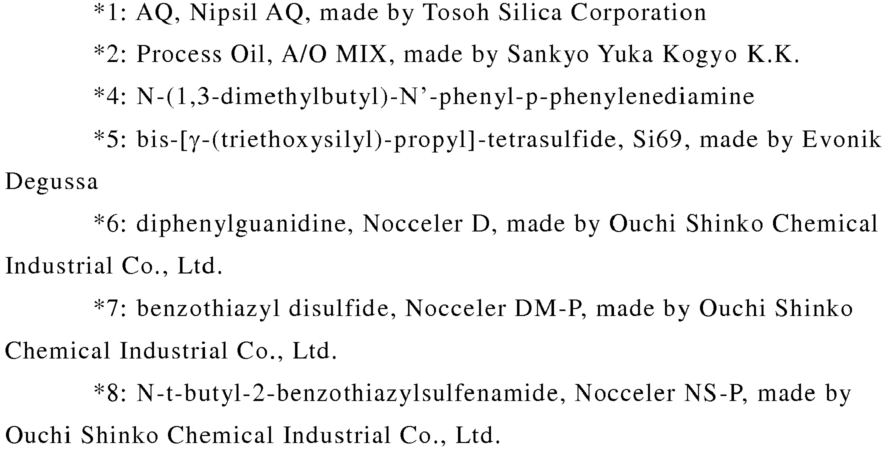

From the result of Table 2, it was understood that as compared to the samples of the rubber compositions of each comparative example, the samples of the rubber compositions of each example using a modified diene-based polymer containing silica within a range of 60 to 250 parts by mass per 100 parts by mass of the rubber component and having modified functional groups merely within a range of 1/4 of the entire chain length from a terminal are greatly excellent in each one of breaking stress, wear resistance and low loss property (tan δ). Moreover, it was understood that as compared to the comparative examples, the processability and the breaking elongation of each example is of the same degree or poorer, but none is too poor such as to inhibit actual use.

According to the facts above, it was understood that the sample of the rubber composition of Example 1 of the present application has excellent low loss property, breaking resistance and wear resistance.

### INDUSTRIAL APPLICABILITY

According to this disclosure, it is possible to provide a rubber composition excellent in low loss property, breaking resistance and wear resistance in the case of containing silica at a large amount as a filler, and to improve the low loss property, the breaking resistance and the wear resistance of a tire by using a tire using such rubber composition.

## Claims

1. A rubber composition containing a rubber component having a diene-based polymer and a silica, wherein:
the diene-based polymer has 3 or more modified functional groups capable of interacting with the silica merely within a range of 1/4 of an entire chain length from a terminal, and has at least one monomer structural unit of a diene-based polymer among the modified functional groups; and a content of the silica is 60 to 250 parts by mass per 100 parts by mass of the rubber component, and
wherein each modified functional group is a nitrogen-containing functional group, silicon-containing functional group or oxygen-containing functional group.

2. The rubber composition according to claim 1, the diene-based polymer has monomer structural units of the diene-based polymer at all points among the modified functional groups.

3. The rubber composition according to claim 1 or 2, wherein:
a peak molecular weight of the diene-based polymer is 50,000 to 700,000.

4. The rubber composition according to any one of claims 1 to 3, wherein:
the diene-based polymer is a polymer or copolymer formed by polymerizing 60 to 100 mass% of a diene-based monomer and 0 to 40 mass% of an aromatic vinyl compound.

5. The rubber composition according to claim 4, wherein:
the diene-based monomer is 1,3-butadiene.

6. The rubber composition according to claim 4 or 5, wherein:
the aromatic vinyl compound is styrene.

7. The rubber composition according to any one of claims 1 to 6, wherein:
the rubber component further has at least one of natural rubber, polyisoprene rubber, polybutadiene rubber and styrene-butadiene rubber except the diene-based polymer.

8. The rubber composition according to any one of claims 1 to 6, wherein:
a content of the diene-based polymer in the rubber component is 10 mass% or more.

9. A method for producing a diene-based polymer, comprising:
forming a molecular chain of a diene-based polymer without modified functional groups, and
forming a molecular chain formed of the functional groups and a monomer structural unit of the diene-based polymer, wherein:
a diene-based polymer having 3 or more modified functional groups capable of interacting with the silica merely within a range of 1/4 of an entire chain length from a terminal, and having at least one monomer structural unit of a diene-based polymer among the modified functional groups is obtained, and
wherein each modified functional group is a nitrogen-containing functional group, silicon-containing functional group or oxygen-containing functional group.

10. The method for producing a diene-based polymer according to claim 9, wherein:
the molecular chain of the diene-based polymer without modified functional groups is formed before forming the molecular chain.

11. The method for producing a diene-based polymer according to claim 9, wherein:
the molecular chain including the functional groups and the monomer structural unit of the diene-based polymer is formed by alternatively or simultaneously adding a monomer component of the diene-based polymer and a modifier.

12. The method for producing a diene-based polymer according to claim 9, wherein:
the molecular chain including the functional groups and the monomer structural unit of the diene-based polymer is formed by alternatively or simultaneously adding a monomer component of the diene-based polymer, and a compound having a site capable of copolymerizing with the monomer component and capable of chemically reacting with a modified functional group including compound and thereby introduced modified functional groups.

13. A tire using the rubber composition according to any one of claims 1 to 8 as a tread member.

## Patentansprüche

1. Kautschukzusammensetzung, die eine Kautschukkomponente, die ein Polymer auf der Basis von Dien aufweist, und ein Siliciumdioxid enthält, wobei:
das Polymer auf der Basis von Dien 3 oder mehr modifizierte funktionelle Gruppen aufweist, die in der Lage sind, mit dem Siliciumdioxid nur innerhalb eines Bereichs von 1/4 einer gesamten Kettenlänge von einem Terminal aus zu interagieren und mindestens eine strukturelle Monomereinheit eines Polymers auf der Basis von Dien unter den modifizierten funktionellen Gruppen aufweist; und ein Gehalt des Siliciumdioxids 60 bis 250 Masseteile pro 100 Masseteile der Kautschukkomponente beträgt; und
wobei jede modifizierte funktionelle Gruppe eine stickstoffhaltige funktionelle Gruppe, siliciumhaltige funktionelle Gruppe oder sauerstoffhaltige funktionelle Gruppe ist.

2. Kautschukzusammensetzung nach Anspruch 1, wobei das Polymer auf der Basis von Dien strukturelle Monomereinheiten des Polymers auf der Basis von Dien an allen Stellen unter den modifizierten funktionellen Gruppen aufweist.

3. Kautschukzusammensetzung nach Anspruch 1 oder 2, wobei ein Spitzenmolekulargewicht des Polymers auf der Basis von Dien 50.000 bis 700.000 beträgt.

4. Kautschukzusammensetzung nach einem der Ansprüche 1 bis 3, wobei:
das Polymer auf der Basis von Dien ein Polymer oder Copolymer ist, das durch Polymerisieren von 60 bis 100 Masse-% eines Monomers auf der Basis von Dien und 0 bis 40 Masse-% einer aromatischen Vinylverbindung gebildet wird.

5. Kautschukzusammensetzung nach Anspruch 4, wobei:
das Monomer auf der Basis von Dien 1,3-Butadien ist.

6. Kautschukzusammensetzung nach Anspruch 4 oder 5, wobei:
die aromatische Vinylverbindung Styrol ist.

7. Kautschukzusammensetzung nach irgendeinem der Ansprüche 1 bis 6, wobei:
die Kautschukkomponente ferner mindestens einen von Naturkautschuk, Polyisoprenkautschuk, Polybutadienkautschuk und Styrol-Butadienkautschuk, mit Ausnahme des Polymers auf der Basis von Dien, aufweist.

8. Kautschukzusammensetzung nach irgendeinem der Ansprüche 1 bis 6, wobei:
ein Gehalt des Polymers auf der Basis von Dien in der Kautschukkomponente 10 Masse-% oder mehr beträgt.

9. Verfahren für die Herstellung eines Polymers auf der Basis von Dien, umfassend:
Bilden einer molekularen Kette eines Polymers auf der Basis von Dien ohne modifizierte funktionelle Gruppen und
Bilden einer molekularen Kette, die aus den funktionellen Gruppen und einer strukturellen Monomereinheit des Polymers auf der Basis von Dien gebildet wird, wobei:
ein Polymer auf der Basis von Dien, das 3 oder mehr modifizierte funktionelle Gruppen aufweist, die in der Lage sind, mit dem Siliciumdioxid nur innerhalb eines Bereichs von 1/4 einer gesamten Kettenlänge von einem Terminal aus zu interagieren und mindestens eine strukturelle Monomereinheit eines Polymers auf der Basis von Dien unter den modifizierten funktionellen Gruppen aufweist, erhalten wird; und
wobei jede modifizierte funktionelle Gruppe eine stickstoffhaltige funktionelle Gruppe, siliciumhaltige funktionelle Gruppe oder sauerstoffhaltigen funktionelle Gruppe ist.

10. Verfahren für die Herstellung eines Polymers auf der Basis von Dien nach Anspruch 9, wobei:
die molekulare Kette des Polymers auf der Basis von Dien ohne modifizierte funktionelle Gruppen vor Bilden der molekularen Kette gebildet wird.

11. Verfahren für die Herstellung eines Polymers auf der Basis von Dien nach Anspruch 9, wobei:
die molekulare Kette, die die funktionellen Gruppen und die strukturelle Monomereinheit des Polymers auf der Basis von Dien umfasst, durch alternatives oder gleichzeitiges Zugeben einer Monomerkomponente des Polymers auf der Basis von Dien und eines Modifiziermittels gebildet wird.

12. Verfahren für die Herstellung eines Polymers auf der Basis von Dien nach Anspruch 9, wobei:
die molekulare Kette, die die funktionellen Gruppen und die strukturelle Monomereinheit des Polymers auf der Basis von Dien umfasst, durch alternatives oder gleichzeitiges Zugeben einer Monomerkomponente des Polymers auf der Basis von Dien und einer Verbindung gebildet wird, die eine Stelle aufweist, die in der Lage ist, mit der Monomerkomponente zu copolymerisieren, und in der Lage ist, chemisch mit einer modifizierten funktionellen Gruppe, die die Verbindung und dadurch eingeführte modifizierte funktionelle Gruppen umfasst, zu reagieren.

13. Reifen, bei dem die Kautschukzusammensetzung nach einem der Ansprüche 1 bis 8 als Laufflächenelement verwendet wird.

## Revendications

1. Composition de caoutchouc contenant un composant de caoutchouc présentant un polymère à base de diène et une silice, où:
le polymère à base de diène présente 3 groupes fonctionnels modifiés ou plus capables d'interagir avec la silice simplement dans une plage de 1/4 d'une longueur entière de chaîne depuis une terminaison, et présente au moins un motif structurel monomère d'un polymère à base de diène parmi les groupes fonctionnels modifiés; et une teneur de la silice est de 60 à 250 parties en masse pour 100 parties en masse du composant de caoutchouc, et
où chaque groupe fonctionnel modifié est un groupe fonctionnel contenant de l'azote, un groupe fonctionnel contenant du silicium ou un groupe fonctionnel contenant de l'oxygène.

2. Composition de caoutchouc selon la revendication 1, le polymère à base de diène présentant des motifs structurels monomères du polymère à base de diène à tous les points parmi les groupes fonctionnels modifiés.

3. Composition de caoutchouc selon la revendication 1 ou 2, dans laquelle:
un poids moléculaire pic du polymère à base de diène est de 50 000 à 700 000.

4. Composition de caoutchouc selon l'une quelconque des revendications 1 à 3, dans laquelle:
le polymère à base de diène est un polymère ou un copolymère formé par polymérisation de 60 à 100 % en masse d'un monomère à base de diène et de 0 à 40 % en masse d'un composé de vinyle aromatique.

5. Composition de caoutchouc selon la revendication 4, dans laquelle:
le monomère à base de diène est le 1,3-butadiène.

6. Composition de caoutchouc selon la revendication 4 ou 5, dans laquelle:
le composé de vinyle aromatique est le styrène.

7. Composition de caoutchouc selon l'une quelconque des revendications 1 à 6, dans laquelle:
le composant de caoutchouc en outre possède au moins l'un du caoutchouc naturel, du caoutchouc de polyisoprène, du caoutchouc de polybutadiène et du caoutchouc de styrène-butadiène excepté le polymère à base de diène.

8. Composition de caoutchouc selon l'une quelconque des revendications 1 à 6, dans laquelle:
une teneur du polymère à base de diène dans le composant de caoutchouc est de 10 % en masse ou plus.

9. Procédé de production d'un polymère à base de diène, comprenant:
la formation d'une chaîne moléculaire d'un polymère à base de diène sans groupes fonctionnels modifiés, et
la formation d'une chaîne moléculaire formée des groupes fonctionnels et d'un motif structurel monomère du polymère à base de diène, où:
un polymère à base de diène présentant 3 groupes fonctionnels modifiés ou plus capables d'interagir avec la silice simplement dans une plage de 1/4 d'une longueur de chaîne entière à partir d'une terminaison, et présentant au moins un motif structurel monomère d'un polymère à base de diène parmi les groupes fonctionnels modifiés est obtenu, et
où chaque groupe fonctionnel modifié est un groupe fonctionnel contenant de l'azote, un groupe fonctionnel contenant du silicium ou un groupe fonctionnel contenant de l'oxygène.

10. Procédé de production d'un polymère à base de diène selon la revendication 9, dans lequel:
la chaîne moléculaire du polymère à base de diène sans groupes fonctionnels modifiés est formée avant la formation de la chaîne moléculaire.

11. Procédé de production d'un polymère à base de diène selon la revendication 9, dans lequel:
la chaîne moléculaire comprenant les groupes fonctionnels et le motif structurel monomère du polymère à base de diène est formée par addition alternativement ou simultanément d'un composant monomère du polymère à base de diène et d'un agent de modification.

12. Procédé de production d'un polymère à base de diène selon la revendication 9, dans lequel:
la chaîne moléculaire comprenant les groupes fonctionnels et le motif structurel monomère du polymère à base de diène est formée par addition alternativement ou simultanément d'un composant monomère du polymère à base de diène, et d'un composé présentant un site capable de copolymérisation avec le composant monomère et capable de réagir chimiquement avec un groupe fonctionnel modifié comprenant le composé et les groupes fonctionnels modifiés introduits ainsi.

13. Pneumatique utilisant la composition de caoutchouc selon l'une quelconque des revendications 1 à 8 comme élément de bande de roulement.
